# EUROPÄISCHE PATENTSCHRIFT

(11) **EP 1 370 479 B1**
(45) Veröffentlichungstag und Bekanntmachung des Hinweises auf die Patenterteilung: **13.07.2005**
(21) Anmeldenummer: 02729815.7
(22) Anmeldetag: 20.03.2002
(51) Int. Cl.: B65G 1/04

(54) **LAGERREGAL MIT LIFT**
STORAGE LIFT
ELEVATEUR DE STOCKAGE

(30) Priorität: 23.03.2001 DE 10115757
(43) Veröffentlichungstag der Anmeldung: 17.12.2003
(73) Patentinhaber: Bellheimer Metallwerk GmbH, D-76752 Bellheim (DE)
(72) Erfinder: BOUCHE, Norbert, 76829 Landau (DE)
(74) Vertreter: Grünecker, Kinkeldey, Stockmair & Schwanhäusser
(86) Internationale Anmeldenummer: PCT/DE2002/001071
(87) Internationale Veröffentlichungsnummer: WO 2002/076858

(56) Entgegenhaltungen:
- EP-A- 0 722 894
- DE-A- 3 929 724
- DE-U- 9 218 776
- DE-U- 29 606 381

## Beschreibung

Die Erfindung betrifft einen Lagerlift mit zwei zur Ablage von Lagergutträgern dienenden, jeweils mit einer Vielzahl von übereinander und im Abstand voneinander angeordneten Stützprofilpaaren für Lagergutträger versehenen Regalsäulen, von denen mindestens eine eine mit einem Lichtgitter zum Erfassen der Höhe des Lagergutes ausgestattete Beschickungs- und Entnahmeöffnung aufweist, sowie mit einem zwischen den Regalsäulen in einem Schacht auf- und abbewegbaren Vertikalförderer, der mit einer Horizontalfördervorrichtung ausgestattet ist, die Mitnehmer aufweist, durch die die Lagergutträger auf den Vertikalförderer überführbar bzw. von ihm entfernbar sind.

Bei bekannten Lagerliften wird mit Hilfe des Lichtgitters - wie beispielsweise in der DE 42 33 688 A1 und der DE 195 01 718 A1 beschrieben - die Höhe des auf den Lagergutträgern angeordneten Lagergutes gemessen, um die jeweiligen Lagergutträger im Sinne einer optimalen Ausnutzung des zur Verfügung stehenden Stauraumes an freien, den Lagerguthöhen hinsichtlich ihre Höhe möglichst nahekommenden Lagerplätzen abzulegen. Ein Lagerlift gemäß dem Oberbegriff der Ansprüche 1 und 5 wird in der DE 296 06 381 U1 offenbart. Der Erfindung liegt die Aufgabe zugrunde, bei einem Lagerlift der in Betracht gezogenen Art mit Hilfe des Lichtgitters und zwar vorzugsweise des zur Höhenmessung verwendeten Lichtgitters die Position des Lagergutträgers in der Beschickungs- und Entnahmeöffnung zu ermitteln bzw. zu überprüfen.

Diese Aufgabe wird durch die erste Erfindung gemäß Anspruch 1 gelöst.

Der Lagerlift gemäß Anspruch 1 bietet den Vorteil, daß sich besondere Sensoren zur Überprüfung der ordnungsgemäßen Position des Lagergutträgers in der Beschickungs- und Entnahmeöffnung erübrigen, eine derartige Überprüfung ist bekanntlich unabdingbar, um eine einwandfreie Überführung des Lagergutträgers aus der Beschickungs- und Entnahmeöffnung auf den Vertikalförderer sicherzustellen.

Anspruch 5 offenbart einen Lagerlift, der ein Einführen von Lagergutträgern in unterschiedlichen Höhenlagen der Beschickungs- und Entnahmeöffnung erlaubt.

Weitere Merkmale und Einzelheiten der Erfindung ergeben sich aus den Unteransprüchen und der nachstehenden Beschreibung einer in den beigefügten Zeichnungen dargestellten besonders vorteilhaften Ausführungsform der Erfindung. Es zeigen:
- Fig. 1: die perspektivische Ansicht eines Lagerliftes;
- Fig. 2: eine der Fig. 1 entsprechende Ansicht des Lagerliftes nach Entfernung von Gehäuseteilen;
- Fig. 3: eine perspektivische Teilansicht der Beschickungs- und Entnahmeöffnung des Lagerliftes gemäß Fig. 1 von der Innenseite des Lagerliftes betrachtet;
- Fig. 4: eine Einzelheit IV der Teilansicht gemäß Fig. 3 in vergrößertem Maßstab und
- Fig. 5: einen Schnitt längs der Linie V-V in Fig. 3.

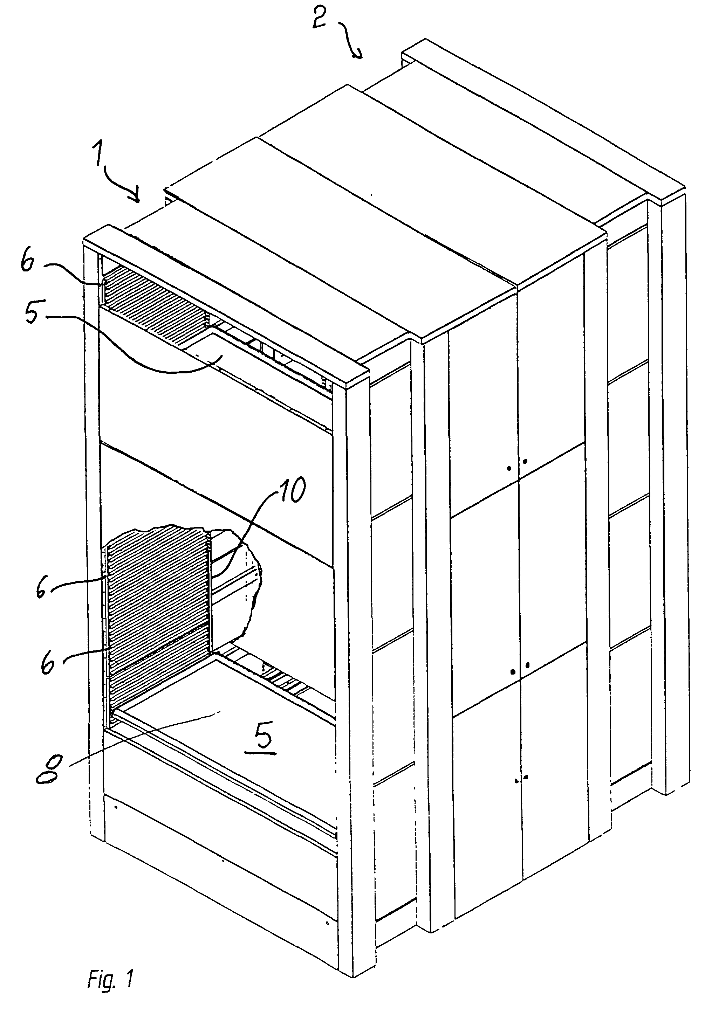

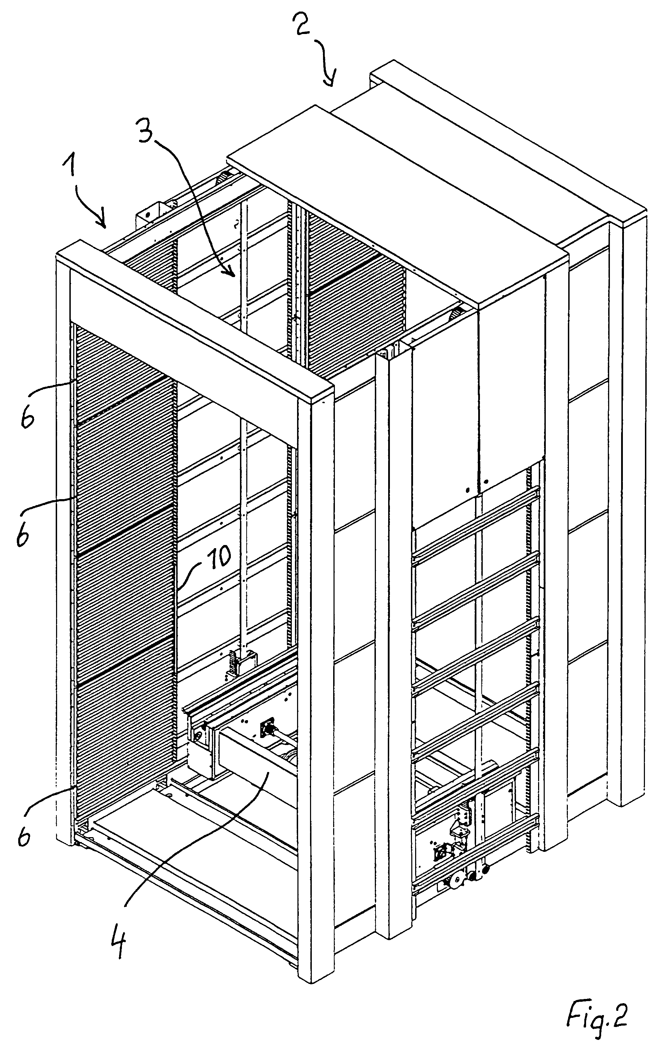

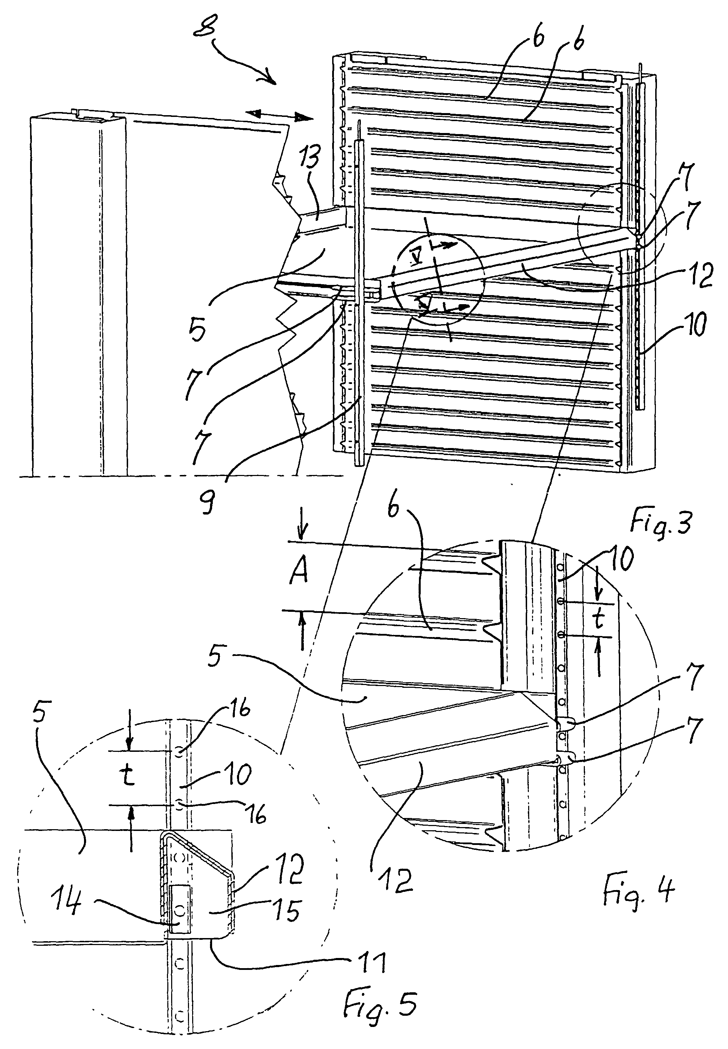

Der in den Fig. 1 und 2 gezeigte Lagerlift verfügt in bekannter Weise über zwei Regalsäulen 1 und 2, die einen Schacht 3 begrenzen, in dem ein mit einer Horizontalfördervorrichtung ausgestatteter Vertikalförderer 4 auf- und abbewegbar ist, um Lagergutträger 5 an unterschiedliche Plätze der Regalsäulen 1 bzw. 2 zu überführen. Die einzelnen Lagerplätze werden dabei von paarweise übereinander und im Abstand voneinander angeordneten Stützprofilen 6 gebildet, die zur Abstützung von Stützstegen 7 an den sich gegenüberliegenden Seiten der Lagergutträger 5 dienen. Abweichend von bekannten Lagerliften sind - wie aus Fig. 1 ersichtlich - bei dem gezeigten Lagerlift auch im Bereich der Beschickungs- und Entnahmeöffnung 8 des Lagerliftes Stützprofile 6 vorgesehen, die ein Einführen von Lagergutträgern 5 in unterschiedlichen Höhenlagen der Beschickungs- und Entnahmeöffnung 8 erlauben. Die jeweilige Bedienungsperson hat folglich die Möglichkeit, die Lagergutträger 5 an einer für sie jeweils ergonomisch optimalen Position in den Lagerlift zu schieben.

Im Bereich des hinteren Endes der Beschickungs- und Entnahmeöffnung 8 ist ein Lichtgitter 9, 10 angeordnet, das zur Messung der Höhe des sich auf den Lagergutträgern jeweils befindlichen Lagergutes genutzt werden kann, das darüber hinaus aber noch eine zusätzliche Funktion erfüllt, indem es zur Identifizierung und Überprüfung der Position des jeweils in die Beschickungs- und Entnahmeöffnung eingebrachten Lagergutträgers 5 dient, wobei sowohl dessen Vertikalposition als auch seine Horizontalposition erfaßt wird.

Die Positionsbestimmung erfolgt unter Zuhilfenahme von den Lagergutträgern 5 zugeordneten Blenden. Bei der in den Zeichnungen dargestellten besonders vorteilhaften Lösung sind Blenden 11 im Bereich von Greifleisten 12 und 13 an den sich gegenüberliegenden Enden der Lagergutträger 5 vorgesehen. Wie aus Fig. 5 ersichtlich, wird die jeweilige Blende 11 von einer mit einem Fenster 14 versehenen Seitenwand 15 der jeweiligen Greifleiste 12 gebildet. Die Abmessungen der Seitenwand 15 und des Fensters 14 sind dabei so auf die Teilung t der Lichtschranken 16 des Lichtgitters 9, 10 abgestimmt, daß jeweils ein Lichtstrahl die Blende passiert und ein Lichtstrahl durch die Blende unterbrochen, d.h. ausgeblendet wird. Während der durchgehende Lichtstrahl zur Positionsbestimmung des jeweiligen Lagergutträgers 5 genutzt wird, dient der unterbrochene Lichtstrahl dazu, einem Steuersystem mitzuteilen, daß sich ein Lagergutträger 5 im Bereich der Beschickungs- und Entnahmeöffnung befindet. Die Teilung t entspricht im übrigen dem halben Abstand A zwischen den jeweils aufeinanderfolgenden Stützprofilen 6.

## Patentansprüche

1. Lagerlift mit zwei zur Ablage von Lagergutträgern dienenden, jeweils mit einer Vielzahl von übereinander und im Abstand voneinander angeordneten Stützprofilpaaren für Lagergutträger versehenen Regalsäulen, von denen mindestens eine eine mit einem Lichtgitter zum Erfassen der Höhe des Lagergutes ausgestattete Beschickungs- und Entnahmeöffnung aufweist, sowie mit einem zwischen den Regalsäulen in einem Schacht auf- und abbewegbaren Vertikalförderer, der mit einer Horizontalfördervorrichtung ausgestattet ist, die Mitnehmer aufweist, durch die die Lagergutträger auf den Vertikalförderer überführbar bzw. von ihm entfernbar sind, **dadurch gekennzeichnet, daß** jeder Lagergutträger (5) mit mindestens einer Blende (11) versehen ist, die jeweils mindestens ein Lichtstrahl des Lichtgitters (9, 10) passieren kann und durch die mindestens ein Lichtstrahl des Lichtgitters (9, 10) ausgeblendet wird, wenn der jeweilige Lagergutträger (5) in der Beschickungs- und Entnahmeöffnung (8) eine vorgegebene Position einnimmt.

2. Lagerlift nach Anspruch 1, **dadurch gekennzeichnet, daß** sich im Bereich mindestens eines der beiden Enden des Lagergutträgers (5) eine Blende (11) befindet.

3. Lagerlift nach Anspruch 2, **dadurch gekennzeichnet, daß** die Blende (11) von mindestens einer Seitenwand (15) einer Greifleiste (12) gebildet wird.

4. Lagerlift nach Anspruch 3, **dadurch gekennzeichnet, daß** beide Seitenwände (15) der Greifleiste (12) als Blenden (11) mit fluchtenden Fenstern (14) ausgebildet sind.

5. Lagerlift nach dem Oberbegriff des Anspruchs 1, **dadurch gekennzeichnet, daß** die Seitenwände der Beschickungs- und Entnahmeöffnung (8) mit zur Einlagerung von Lagergutträgern (5) in unterschiedlichen Höhen nutzbaren übereinander und im Abstand voneinander angeordneten Stützprofilen (6) versehen sind.

6. Lagerlift nach Anspruch 5, **dadurch gekennzeichnet, daß** der Abstand (A) zwischen den sich über die gesamte Höhe der Beschickungs- und Entnahmeöffnung (8) erstreckenden Stützprofilen (6) gleich dem Abstand (A) zwischen den Stützprofilen (6) der Regalsäulen (1, 2) ist.

7. Lagerlift nach Anspruch 5 oder 6 und einem der Ansprüche 1 bis 4, **dadurch gekennzeichnet, daß** das Lichtgitter (9, 10) zur Identifizierung der Horizontal- und Vertikallage der Lagergutträger (5) in der Beschickungs- und Entnahmeöffnung (8) nutzbar ist.

8. Lagerlift nach einem der Ansprüche 5 bis 7, **dadurch gekennzeichnet, daß** die Abstände (A) zwischen den Stützprofilen (6) der Regalsäulen (1, 2) und den Stützprofilen (6) der Beschickungs- und Entnahmeöffnung (8) gleich der Teilung (t) der Lichtschranken des Lichtgitters (9, 10) sind.

9. Lagerlift nach einem der Ansprüche 5 bis 7, **dadurch gekennzeichnet, daß** die Abstände (A) zwischen den Stützprofilen (6) der Regalsäulen (1, 2) und den Stützprofilen (6) der Beschickungs- und Entnahmeöffnung (8) einem Vielfachen der Teilung (t) der Lichtschranken des Lichtgitters (9, 10) entsprechen.

## Claims

1. Storage lift comprising two shelving columns that are used to support storage goods carriers and are each provided with a large number of pairs of supporting profiles for storage goods carriers that are arranged one above another and at a distance from one another, of which columns at least one has a loading and removal opening equipped with a grid of lights for detecting the height of the storage goods, and also comprising a vertical conveyor which can be moved up and down in a shaft between the shelving columns and which is equipped with a horizontal conveyor device which has drivers by means of which the storage goods carrier can be transferred onto the vertical conveyor or removed from it, **characterized in that** each storage goods carrier (5) is provided with at least one faceplate (11) through which in each case at least one light beam from the grid of lights (9, 10) can pass and by means of which at least one light beam from the grid of lights (9, 10) is masked out when the respective storage goods carrier (5) assumes a predefined position in the loading and removal opening (8).

2. Storage lift according to Claim 1, **characterized in that** a faceplate (11) is located in the region of at least one of the two ends of the storage goods carrier (5).

3. Storage lift according to Claim 2, **characterized in that** the faceplate (11) is formed by at least one side wall (15) of a grip strip (12).

4. Storage lift according to Claim 3, **characterized in that** both side walls (15) of the grip strip (12) are formed as faceplates (11) with aligning windows (14).

5. Storage lift according to the precharacterizing clause of Claim 1, **characterized in that** the side walls of the loading and removal opening (8) are provided with supporting profiles (6) which can be used for storing storage goods carriers (5) at different heights and are arranged one above another and at a distance from one another.

6. Storage lift according to Claim 5, **characterized in that** the distance (A) between the supporting profiles (6) extending over the entire height of the loading and removal opening (8) is equal to the distance (A) between the supporting profiles (6) of the shelving columns (1, 2).

7. Storage lift according to Claim 5 or 6 and one of Claims 1 to 4, **characterized in that** the grid of lights (9, 10) can be used for identifying the horizontal and vertical position of the storage goods carriers (5) in the loading and removal opening (8).

8. Storage lift according to one of Claims 5 to 7, **characterized in that** the distances (A) between the supporting profiles (6) of the shelving columns (1, 2) and the supporting profiles (6) of the loading and removal opening (8) are equal to the pitch (t) of the light barriers of the grid of lights (9, 10).

9. Storage lift according to one of Claims 5 to 7, **characterized in that** the distances (A) between the supporting profiles (6) of the shelving columns (1, 2) and the supporting profiles (6) of the loading and removal opening (8) correspond to a multiple of the pitch (t) of the light barriers of the grid of lights (9, 10).

## Revendications

1. Elévateur de stockage comportant deux colonnes de rayonnages, qui sont utilisées pour le rangement de support du matériau en stock et sont pourvues respectivement d'une multiplicité de paires de profilés d'appui superposés et situés à distance les uns des autres, pour des supports du matériau en stock, au moins l'une des colonnes de rayonnages possédant au moins une ouverture de chargement et de prélèvement équipée d'une grille lumineuse pour détecter la hauteur du matériau en stock, ainsi qu'un transporteur vertical pouvant être soulevé et abaissé dans un puits entre les colonnes de rayonnage et qui est équipé d'un dispositif d'entraînement horizontal qui comporte des organes d'entraînement, à l'aide desquels les supports du matériau en stock peuvent être transférés sur le transporteur vertical ou en être retirés, **caractérisé en ce que** chaque support (5) du matériau en stock est pourvu au moins d'un diaphragme (11) qui permet le passage respectivement d'au moins un faisceau de lumière de la grille lumineuse (9, 10) et au moyen duquel le au moins un faisceau de lumière de la grille lumineuse (9, 10) est occulté lorsque le support respectif (5) du matériau en stock prend une position prédéterminée dans l'ouverture de chargement et de prélèvement (8).

2. Elévateur de stockage selon la revendication 1, **caractérisé en ce qu'**un diaphragme (11) est disposé dans la zone d'au moins l'une des deux extrémités du support (5) du matériau en stock.

3. Elévateur de stockage selon la revendication 2, **caractérisé en ce que** le diaphragme (11) est formé par au moins une paroi latérale (15) d'une barrette de préhension (12).

4. Elévateur de stockage selon la revendication 3, **caractérisé en ce que** les deux parois latérales (15) de la barrette de préhension (12) sont agencées sous la forme de diaphragmes (11) comportant des fenêtres alignées (14).

5. Elévateur de stockage conformément au préambule de la revendication 1, **caractérisé en ce que** les parois latérales de l'ouverture de chargement et de prélèvement (8) sont équipées de profilés d'appui (6), qui sont utilisables pour l'insertion de supports (5) de matériaux en stock à des hauteurs différentes, et sont disposés de manière superposée à distance les uns des autres.

6. Elévateur de stockage selon la revendication 5, **caractérisé en ce que** la distance (A) entre les profilés d'appui (6), qui s'étendent sur toute la hauteur de l'ouverture de chargement et de prélèvement (8), est égale à la distance (A) entre les profilés d'appui (6) des colonnes de rayonnages (1, 2).

7. Elévateur de stockage selon la revendication 5 ou 6 et l'une des revendications 1 et 4, **caractérisé en ce que** la grille lumineuse (9, 10) peut être utilisée pour identifier la position horizontale et la position verticale des supports (5) du matériau en stock dans l'ouverture de chargement et de prélèvement (8).

8. Elévateur de stockage selon l'une des revendications 5 à 7, **caractérisé en ce que** les distances (A) entre les profilés d'appui (6) des colonnes de rayonnages (1, 2) et les profils d'appui (6) de l'ouverture de chargement et de prélèvement (8) sont égales au pas de répartition (t) des rampes lumineuses de la grille lumineuse (9, 10).

9. Elévateur de stockage selon l'une des revendications 5 à 7, **caractérisé en ce que** les distances (A) entre les profilés d'appui (6) des colonnes de rayonnages (1, 2) et les profils d'appui (6) de l'ouverture de chargement et de prélèvement (8) correspondent à un multiple du pas de répartition (t) des rampes lumineuses de la grille lumineuse (9, 10).
